# EUROPÄISCHE PATENTSCHRIFT

(11) **EP 1 269 442 B1**
(45) Veröffentlichungstag und Bekanntmachung des Hinweises auf die Patenterteilung: **08.04.2009**
(21) Anmeldenummer: 01927750.8
(22) Anmeldetag: 19.03.2001
(51) Int. Cl.: G08C 19/02

(54) **VERFAHREN UND VORRICHTUNG ZUR DATENKOMMUNIKATION MIT EINER EIN ELEKTRONISCHES GERÄT STEUERNDEN DATENVERARBEITUNGSEINRICHTUNG**
METHOD AND DEVICE FOR DATA COMMUNICATION WITH A DATA PROCESSING DEVICE CONTROLLING AN ELECTRONIC DEVICE
PROCEDE ET DISPOSITIF POUR LA COMMUNICATION DE DONNEES AVEC UN DISPOSITIF DE TRAITEMENT DE DONNEES COMMANDANT UN APPAREIL ELECTRONIQUE

(30) Priorität: 20.03.2000 DE 10013554
(43) Veröffentlichungstag der Anmeldung: 02.01.2003
(73) Patentinhaber: Pepperl + Fuchs GmbH, 68307 Mannheim (DE)
(72) Erfinder: KUKA, Achim, 68163 Mannheim (DE); PFAFF, Georg, 67117 Limburgerhof (DE)
(74) Vertreter: Mierswa, Klaus
(86) Internationale Anmeldenummer: PCT/EP2001/003101
(87) Internationale Veröffentlichungsnummer: WO 2001/071667

(56) Entgegenhaltungen:
- US-A- 4 783 659
- US-A- 5 083 288
- US-A- 5 646 938

## Beschreibung

### Technisches Gebiet:

Die Erfindung betrifft ein Verfahren zur Datenkommunikation mit einer wenigstens ein elektronisches Gerät, wie Sensor, steuernden elektronischen Datenverarbeitungseinrichtung, wie Mikrokontroler oder programmierbare Logik, welche einen Eingang aufweist und in welcher ein Datenverarbeitungsprogramm in einer ständigen Schleife abläuft, das zyklisch abfragt, ob an dem Eingang eine Spannung anliegt, die größer bzw. kleiner ist als ein bestimmter Spannungswert, gemäß dem Oberbegriff des Anspruchs 1, wie die Erfindung auch eine derartige Vorrichtung gemäß dem Oberbegriff des Anspruchs 17 betrifft.

### Stand der Technik:

Elektronische Datenverarbeitungseinrichtungen, z.B. Mikrokontroler, werden häufig zur softwaregestützten Steuerung von Geräten, z.B. von Meßgeräten oder Sensoren, eingesetzt. Für solche Aufgaben eingesetzte elektronische Datenverarbeitungseinrichtungen verfügen in vielen Fällen sowohl über einen flüchtigen Speicher, z.B. ein Register, als auch über einen nichtflüchtigen Speicher, z.B. einen EEPROM, der ein zur Steuerung und zum Betrieb des betreffenden Systems dienendes Softwareprogramm sowie evtl. weitere benötigte Daten enthält.

Falls keine Möglichkeit einer Dateneingabe in die elektronische Datenverarbeitungseinrichtung an ihrem Einsatzort besteht, ist eine nachträgliche Änderung der Speicherinhalte nicht möglich, ohne das System oder Teile davon von seinem Einsatzort zu entfernen. In Fällen, in denen das System in ein Gehäuse eingegossen ist, muß zudem für eine nachträgliche Dateneingabe das Gehäuse geöffnet und damit in der Regel zerstört werden.

In vielen Fällen ist es wünschenswert und vorteilhaft, eine nachträgliche Dateneingabe von einem entfernten Ort aus vornehmen zu können, ohne das System vor Ort zu entfernen und ohne ein eventuell vorhandenes Gehäuse zu öffnen. Ein solcher Fall liegt z.B. vor, wenn ein System neu parametriert, kalibriert, abgeglichen oder in einen bestimmten Betriebszustand versetzt werden soll.

Beispielsweise kann es erforderlich sein, einen Mikrokontroler, der in einen induktiven Näherungssensor eingebaut ist und den Betrieb des Sensors steuert, durch Einflußnahme von einem entfernten Ort aus durch die Eingabe entsprechender Daten zu veranlassen, die Empfindlichkeit des Näherungssensors für eine bestimmte Zeitdauer zu erhöhen und danach wieder zu reduzieren, ohne den Näherungssensor oder Teile davon zu diesem Zweck demontieren und anschließend wieder an den Einsatzort verbringen zu müssen. Ebenso kann es erforderlich sein, eine unerwünschte Verschiebung eines Parameters in einem Gerät ferngesteuert neutralisieren zu können.

In anderen Fällen, z.B. bei Überwachungsanlagen, kann es wünschenswert sein, bestimmte Parameter des Systems durch eine Dateneingabe von einem entfernten Ort aus verändern zu können, ohne den Betrieb des Systems für längere Zeit zu unterbrechen.

Aufgrund der in vielen Fällen beschränkten Anzahl der für eine Dateneingabe von einem entfernten Ort aus zur Verfügung stehenden Leitungen ist hierbei die Möglichkeit einer seriellen Dateneingabe besonders vorteilhaft, zum Beispiel über eine RS232-Schnittstelle. Nachteile dieser Methode sind der erforderliche Zusatzaufwand an Hardware und die Notwendigkeit einer zusätzlichen Datenleitung.

Eine weitere Möglichkeit einer seriellen Dateneingabe von einem entfernten Ort aus besteht darin, das System mit einer Infrarot-Schnittstelle auszurüsten, die Signale in Form elektromagnetischer Strahlung im infraroten Spektralbereich empfängt bzw. solche emittiert. Nachteile dieses Verfahrens sind der erforderliche große Hardware-Aufwand, der große Raumbedarf der erforderlichen Hardware sowie die Notwendigkeit, den Strahlengang von Verschmutzung und Hindernissen frei zu halten. Durch den letztgenannten Nachteil sind die Einsatzmöglichkeiten von Infrarot-Schnittstellen eingeschränkt.

Durch die DE 41 23 828 C2 ist ein Verfahren zur seriellen Dateneingabe bekannt geworden, das auf einer Modulation der Betriebsspannung der elektronischen Datenverarbeitungseinrichtung basiert und ohne zusätzliche Datenleitungen auskommt. Nachteile dieses Verfahrens sind der große Hardware-Aufwand, der große Raumbedarf der Hardware und die Notwendigkeit, ein Programmiergerät in die Versorgungsleitung zwischenzuschalten.

Aus der DE-OS 40 15 271 A1 ist eine Schaltungsanordnung mit einem Mikrocomputer bekannt, mit welcher die Stellung eines Schalters abgefragt werden kann. Ein Anschluß des abzufragenden Schalters ist mit festem Potential, der andere Anschluß mit dem Mikrocomputer und einem Widerstand verbunden. Der Widerstand ist über einen vom Mikrocomputer steuerbaren Schalter mit einem vom festen Potential abweichenden Potential verbindbar, wobei der Mikrocomputer den steuerbaren Schalter für mindestens die Dauer der Abfrage in den leitenden Zustand steuert.

Aus der DE 198 19 265 C1 ist ein Verfahren zum Parametrieren einer integrierten Schaltungsanordnung bekannt, bei welchem ein digitales Startkommandosignal mit nachfolgenden Parametrierdaten in Form einer modulierten Spannung an den Versorgungsspannungsanschluß und/oder an einen Ausgang der integrierten Schaltung angelegt wird. Die modulierte Spannung ist während des Parametriervorgangs ständig größer als der normale Betriebsspannungspegel der integrierten Schaltung.

Aus der DE 198 31 493 A1 ist ein optoelektronischer Sensor bekannt, welcher einen parametrierbaren Ein-/Ausgang aufweist, über den je nach Parametrierung wahlweise Daten eingegeben oder ausgegeben werden können.

Schließlich ist durch die US 5,646,938 eine Vorrichtung für den seriellen Austausch von Daten zwischen zwei Stationen bekannt geworden, wobei jede Station ein serielles interface aufweist, welches mit einer Datenübertragungsstrecke verbunden ist. Eine erste Station hat eine Einrichtung, welche während des Datenempfanges die zwei möglichen Bitzustände auf der Basis von unterschiedlicher Spannungspegeln auf der Datenübertragungsleitung feststellt. Im Gegensatz hierzu besitzt die zweite Station eine Einrichtung, welche während des Datenempfanges die zwei möglichen Bitzustände auf der Basis von Vorhandensein oder Abwesenheit von Stromfluss durch die Datenübertragungsleitung feststellt. Weiterhin ist in einer Einrichtung für den seriellen Austausch der Daten zwischen den beiden Stationen sichergestellt, dass vier unterschiedliche Spannungspegel auf der Datenübertragungsleitung erzeugt werden, wenn jede Station ein "1"-Bit oder ein "0"-Bit erzeugt. Die Spannungspegel werden durch die Stationen unterschiedlich bewertet mit dem Ergebnis, dass eine simultane Datentransmission in beiden Richtungen auf der Übertragungsleitung möglich ist.

Ein hierzu verwandter Gegenstand ist auch durch die US 4783659 bekannt geworden. Eine Zweidraht-Übertragungseinrichtung kontrolliert einen Schleifenstrom als Funktion von Parametern, wie Druck oder Temperatur, in dem ein analoges Sensorsignal und ein Prozeßsignal benützt wird. Korrekturen, wie für Null und Liniarität, sind durch die Korrektur des Analogsignals durch einen digitalen Schaltkreis vorgesehen, welcher einen nichtflüchtigen Speicher, einen Mikrocomputer sowie eine Digital-Analog-Wandler aufweist. Der Mikroprozessor kontrolliert den D/A-Wandler als Funktion der gespeicherten digitalen Korrekturwerte, um eine analoge Korrektur des Signals zu erzeugen, wobei diese Korrekturwerte auf dem analogen Prozeßschaltkreis benützt werden, um die Größe des Schleifenstroms zu kontrollieren, welcher durch die Zweidraht-Übertragungseinrichtung fließt.

Eine hiermit ebenfalls verwandte Einrichtung beinhaltet auch die US 5083288, bei welcher die Übertragung eines entfernt entstehenden Sensorsignals an einen Übertrager weitergeleitet wird.

### Technische Aufgabe:

Der Erfindung liegt die Aufgabe zugrunde, ein Verfahren und eine Vorrichtung zur bidirektionalen Datenkommunikation mit einer elektronischen Datenverarbeitungseinrichtung, die ein elektronisches Gerät wie z.B. einen Sensor steuert, von einem entfernten Ort aus bereitzustellen, damit die Datenverarbeitungseinrichtung das elektronische Gerät zum Beispiel parametrisiert oder abgleicht, wobei nur ein geringer Zusatzaufwand an Hardware und insbesondere keine zusätzliche Leitung oder Veränderungen des Gehäuses des Gerätes erforderlich sein soll.

Diese Aufgabe wird erfindungsgemäß gelöst durch ein Verfahren zur Datenkommunikation mit einer wenigstens ein elektronisches Gerät (10) steuernden elektronischen Datenverarbeitungseinrichtung (1), welche einen Eingang (2) und einen digitalen Ausgang (3), über welchen eine Datenausgabe erfolgen kann, aufweist und in welcher ein Datenverarbeitungsprogramm in einer ständigen Schleife abläuft, das zyklisch abfragt, ob an dem Eingang (2) eine Spannung anliegt, die größer bzw. kleiner ist als ein bestimmter Spannungswert,
wobei eine Spannung, die über dem bestimmten Spannungswert liegt, über einen Widerstand (20) an den Eingang (2) angelegt wird, der über einen Eingabeschalter (50, 50a) an Masse (32) oder einen anderen Spannungspol gelegt ist, so daß der Spannungsabfall am Widerstand (20) durch den Schaltzustand des Eingabeschalters (50, 50a) so beeinflußt ist, daß die am Eingang (2) anliegende Spannung bei geöffnetem Eingabeschalter (50, 50a) größer und bei geschlossenem Eingabeschalter (50, 50a) kleiner ist als der bestimmte Spannungswert,
wobei das Datenverarbeitungsprogramm aus Abfragen, ob die am Eingang (2) anliegende Spannung größer oder kleiner ist als der bestimmte Spannungswert, eine digitale Information bildet, welche ausgegeben oder mit welcher das elektronische Gerät (10) angesteuert werden kann, so daß durch Betätigen des Eingabeschalters (50, 50a) eine Dateneingabe in die elektronische Datenverarbeitungseinrichtung (1) erfolgen kann,
dadurch gekennzeichnet, daß
- der digitale Ausgang (3) an den Steuereingang (42) eines elektronischen Schalters (40) angeschlossen ist, dessen Signaleingang (41) mit dem Eingang (2) und dessen Signalausgang (43) über den Eingabeschalter (50, 50a) mit Masse (32) verbunden ist,
und die Dateneingabe und die Datenausgabe zeitlich gegeneinander versetzt über eine gemeinsame Ausgabeleitung (35) erfolgen.

Die Aufgabe wird ferner gelöst durch eine Vorrichtung zur seriellen Datenkommunikation mit einer wenigstens ein elektronisches Gerät (10) steuernden elektronischen Datenverarbeitungseinrichtung (1), welche einen Eingang (2) und einen digitalen Ausgang (3), über welchen eine Datenausgabe erfolgen kann, aufweist und in welcher ein Datenverarbeitungsprogramm in einer ständigen Schleife abläuft, das zyklisch abfragt, ob an dem Eingang (2) eine Spannung anliegt, die größer bzw. kleiner ist als ein bestimmter Spannungswert,
wobei eine Spannung, die über dem bestimmten Spannungswert liegt, über einen Widerstand (20) an den Eingang (2) angelegt wird, der über einen Eingabeschalter (50, 50a) an Masse (32) gelegt ist, so daß der Spannungsabfall am Widerstand (20) durch den Schaltzustand des Eingabeschalters (50, 50a) so beeinflußt ist, daß die am Eingang (2) anliegende Spannung bei geöffnetem Eingabeschalter (50, 50a) größer und bei geschlossenem Eingabeschalter (50, 50a) kleiner ist als der bestimmte Spannungswert,
wobei das Datenverarbeitungsprogramm aus Abfragen, ob die am Eingang (2) anliegende Spannung größer oder kleiner ist als der bestimmte Spannungswert, eine digitale Information bildet, welche ausgegeben oder mit welcher das elektronische Gerät (10) angesteuert werden kann, so daß durch Betätigen des Eingabeschalters (50, 50a) eine Dateneingabe in die elektronische Datenverarbeitungseinrichtung (1) erfolgen kann,
dadurch gekennzeichnet, daß
- der digitale Ausgang (3) an den Steuereingang (42) eines elektronischen Schalters (40) angeschlossen ist, dessen Signaleingang (41) mit dem Eingang (2) und dessen Signalausgang (43) über den Eingabeschalter (50, 50a) mit Masse (32) verbunden ist,
- und die Dateneingabe und die Datenausgabe zeitlich gegeneinander versetzt über eine gemeinsame Ausgabeleitung (35) erfolgen.

Somit liegt an dem Eingang der elektronischen Datenverarbeitungseinrichtung je nach Schalterstellung eine Spannung an, die höher oder niedriger ist das der bestimmte Spannungswert. Die aus Abfragen gebildete digitale Information kann z.B. ein digitales Wort sein.

Durch Betätigen des Eingabeschalters kann an den Eingang der elektronischen Datenverarbeitungseinrichtung somit in beliebiger Abfolge eine größere oder kleinere Spannung, als dem bestimmten Spannungswert entspricht, angelegt werden. Das Softwareprogramm fragt in zyklischer Folge ab, ob die am Eingang anliegende Spannung größer bzw. kleiner ist als dieser bestimmte Spannungswert oder nicht.

Die elektronische Datenverarbeitungseinrichtung und das in ihr ablaufende Softwareprogramm fungieren hierbei also als Detektor für die am Eingang anliegende Spannung, somit für den Stromfluß durch den Widerstand und somit für die Schalterstellung.

Das elektronische Gerät kann z.B. ein Sensor sein. Die elektronische Datenverarbeitungseinrichtung kann z.B. ein Mikrokontroler oder eine programmierbare Logik sein.

Das Softwareprogramm bildet jeweils gemäß einer Anzahl von Abfrageergebnissen eine digitale Information, z.B. ein digitales Wort. Auf diese Weise können erfindungsgemäß beliebige digitale Informationen in die elektronische Datenverarbeitungseinrichtung eingegeben werden, welche diese Daten weiterleiten bzw. an das elektronische Gerät ausgeben kann.

Der Eingang der elektronischen Datenverarbeitungseinrichtung kann z.B. ein Schalteingang, ein Dateneingang, ein Signaleingang für analoge oder digitale Signale oder ein Interrupteingang sein.

In einer bevorzugten Ausführungsform der Erfindung weist die elektronische Datenverarbeitungseinrichtung eine Low-aktive Interrupteinrichtung und einen Interrupteingang auf, der als Eingang gemäß der Oberbegriffe von Anspruch 1 und 17 benutzt wird, wobei eine Spannung, die über dem zur Aktivierung der Interrupteinrichtung notwendigen Spannungswert liegt, über einen Widerstand an den Interrupteingang angelegt wird, der über einen Eingabeschalter an Masse gelegt ist, so daß sich die Interrupteinrichtung bei geschlossenem Eingabeschalter im aktiven und bei geöffnetem Eingabeschalter nicht im aktiven Zustand befindet. Der bestimmte Spannungswert gemäß der Oberbegriffe der Ansprüche 1 und 17 entspricht in dieser Ausführungsform der Erfindung dem zur Aktivierung der Interrupteinrichtung notwendigen Spannungswert.

Die Software ist vorzugsweise so eingerichtet, daß sie auf ein bestimmtes oder eine Mehrzahl bestimmter der auf diese Weise eingegebenen digitalen Informationen auf jeweils bestimmte Weise reagiert. Die gesendeten digitalen Informationen können z.B. Befehle, numerische Daten, Speicheradressen oder Sprungadressen sein. Das von der Datenverarbeitungseinrichtung gesteuerte elektronische Gerät kann einen nichtflüchtigen löschbaren und programmierbaren Speicher, z.B. einen EEPROM, umfassen und die Software so eingerichtet sein, daß durch die Eingabe bestimmter digitaler Informationen der Speicherinhalt des nichtflüchtigen Speichers verändert wird. Auf diese Weise kann erreicht werden, daß bestimmte nachträglich eingegebene Daten, z.B. nachträglich an veränderte Umgebungsbedingungen angepaßte Kalibrierwerte, nach einem Neustart des Systems ohne erneute Eingabe zur Verfügung stehen.

Die Software kann ferner so eingerichtet sein, daß sie als Sperre gegen eine unbeabsichtigte, irrtümliche oder durch Störungen verursachte Eingabe von Daten zunächst nur auf ein einziges bestimmtes digitales Wort, d.h. ein CodeWort, reagiert und dieses als Befehl "weitere Befehle und Daten entgegennehmen" interpretiert. In diesem Fall können erst nach Eingabe des Codewortes weitere Daten eingegeben werden.

Die Software kann ferner so eingerichtet sein, daß das System nach Eingabe eines weiteren bestimmten Codewortes, das als Befehl "keine weiteren Befehle oder Daten mehr entgegennehmen" interpretiert wird, wieder in den gegen ungewollte Dateneingabe gesperrten Zustand übergeht. Eine andere Möglichkeit besteht darin, die Software so einzurichten, daß das System nach dem Empfang eines bestimmten Codewortes für eine bestimmte Zeitspanne bereit ist, weitere Eingaben entgegenzunehmen, und dann selbsttätig in den gegen ungewollte Eingaben gesperrten Betriebszustand zurückkehrt.

Der Eingabeschalter kann z.B. ein mechanischer Schalter oder Taster sein, der manuell betätigt wird. Selbstverständlich kann die Eingabe digitaler Worte auf diese Weise nur mit geringer Geschwindigkeit erfolgen, was jedoch für bestimmte Anwendungen ausreichend sein kann. Der Eingabeschalter kann des weiteren ein elektronischer Schalter sein, der mit Hilfe einer geeigneten Einrichtung, z.B. eines Mikroprozessors oder Computers, betätigt wird. Der Eingabeschalter kann sich an einem vom System entfernten Ort befinden und mit diesem über eine separate Eingabeleitung verbunden sein.

Erfindungsgemäß ist es jedoch in vielen Fällen zur seriellen Eingabe von Daten in eine elektronischen Datenverarbeitungseinrichtung von einem entfernten Ort aus nicht erforderlich, eine separate Eingabeleitung zur Verfügung zu stellen, wie im folgenden erläutert wird.

In vielen Fällen dient die elektronische Datenverarbeitungseinrichtung nicht allein zur Steuerung eines elektronischen Gerätes, z.B. eines Sensor- oder Meßsystems, sondern erfüllt zugleich die Aufgabe, fortlaufend, in regelmäßigen zeitlichen Abständen oder bei Bedarf ein digitales Signal über einen digitalen Ausgang und eine aus dem System herausführende Ausgabeleitung an einen entfernten Ort seriell auszugeben. Das digitale Signal kann z.B. ein Schaltsignal sein, das von dem System abgegeben wird, wenn eine bestimmte Bedingung erfüllt ist. Das digitale Signal kann des weiteren z.B. einem Meßwert, der von einem Meßaufnehmer geliefert wird, oder einem bestimmten Betriebszustand, in dem sich das System aktuell befindet, entsprechen.

Die in diesen Fällen zu einem entfernten Ort führende Ausgabeleitung wird dazu benutzt, in der oben beschriebenen Weise seriell Daten in die Datenverarbeitungseinrichtung einzugeben, so daß hierzu erfindungsgemäß keine separate Leitung erforderlich ist.

In dieser Ausführungsform der Erfindung ist das von der elektronischen Datenverarbeitungseinrichtung gesteuerte elektronische Gerät erfindungsgemäß zusätzlich mit einem elektrischen oder elektronischen Schalter, z.B. einem Transistor, ausgestattet, der ein bipolarer Transistor oder ein Feldeffekt-Transistor sein kann. Der elektrische bzw. elektronische Schalter ist so zwischen den Eingang der elektronischen Datenverarbeitungseinrichtung und den Eingabeschalter geschaltet, daß der Signaleingang des elektrischen bzw. elektronischen Schalters mit dem Eingang der elektronischen Datenverarbeitungseinrichtung verbunden und der Signalausgang des elektrischen bzw. elektronischen Schalters über den Eingabeschalter an Masse gelegt ist, während der Steuereingang des elektrischen bzw. elektronischen Schalters mit dem digitalen Ausgang der elektronischen Datenverarbeitungseinrichtung der Ausgabeleitung verbunden ist.

In einer bevorzugten Ausführungsform der Erfindung ist der elektrische bzw. elektronische Schalter ein bipolarer Transistor oder ein Feldeffekt-Transistor, der so zwischen den Eingang der elektronischen Datenverarbeitungseinrichtung und den Eingabeschalter geschaltet ist, daß der Kollektor bzw. Drain-Anschluß mit dem Eingang der elektronischen Datenverarbeitungseinrichtung verbunden und der Emitter bzw. Source-Anschluß über den Eingabeschalter an Masse gelegt ist, während die Basis bzw. der Gate-Anschluß mit dem digitalen Ausgang der elektronischen Datenverarbeitungseinrichtung verbunden ist.

Die Ausgabeleitung ist erfindungsgemäß an den Signalausgang des elektrischen bzw. elektronischen Schalters bzw. Emitter des bipolaren Transistors bzw. Source-Anschluß des Feldeffekt-Transistors angeschlossen. Der Eingabeschalter kann daher, anstatt direkt an den Emitter bzw. Source-Anschluß des Transistors angeschlossen zu sein, an einem entfernten Ort an die Ausgabeleitung angeschlossen sein. Der elektrische bzw. elektronische Schalter bzw. der Transistor sind so ausgelegt, daß er schließt bzw. durchschaltet, wenn am digitalen Ausgang der elektronischen Datenverarbeitungseinrichtung ein High-Signal anliegt.

Bei geöffnetem Eingabeschalter werden die vom digitalen Ausgang der elektronischen Datenverarbeitungseinrichtung abgegebenen Signale über den elektrischen bzw. elektronischen Schalter bzw. den Transistor und über die Ausgabeleitung ausgegeben. Der Signaleingang des elektrischen bzw. elektronischen Schalters bzw. der Kollektor bzw. Drain-Anschluß des Transistors und damit der Eingang der elektronischen Datenverarbeitungseinrichtung sind bei geöffnetem Eingabeschalter gegenüber Masse praktisch isoliert, so daß der Spannungsabfall am Widerstand gering ist. Am Eingang der elektronischen Datenverarbeitungseinrichtung liegt daher über den Widerstand eine Spannung an, die über dem bestimmten Spannungswert liegt.

Bei geschlossenem Eingabeschalter jedoch ist der Signalausgang des elektrischen bzw. elektronischen Schalters bzw. der Emitter bzw. der Source-Anschluß des Transistors gegen Masse kurzgeschlossen. Sofern gleichzeitig am digitalen Ausgang der elektronischen Datenverarbeitungseinrichtung ein High-Signal anliegt, so daß der elektrische bzw. elektronische Schalter öffnet bzw. der Transistor durchschaltet, ist somit auch der Signaleingang des elektrischen bzw. elektronischen Schalters bzw. der Kollektor bzw. der Drain-Anschluß des Transistors und damit auch der Eingang der elektronischen Datenverarbeitungseinrichtung praktisch gegen Masse kurzgeschlossen, so daß am Widerstand ein so großer Spannungsabfall erfolgt, daß die am Eingang anliegende Spannung unterhalb des bestimmten Spannungswertes liegt.

In dieser Ausführungsform der Erfindung ist demnach eine serielle Eingabe von Daten in die elektronische Datenverarbeitungseinrichtung durch Betätigen des Eingabeschalters nur möglich, wenn an dem digitalen Ausgang der elektronischen Datenverarbeitungseinrichtung ein High-Signal anliegt. Der digitale Ausgang kann auf verschiedene Weisen dazu veranlaßt werden, ein High-Signal auszugeben.

Falls das von der Datenverarbeitungseinrichtung gesteuerte elektronische Gerät ein Sensor ist, der bei Auslösung ein Schaltsignal über den digitalen Ausgang ausgibt, besteht eine Möglichkeit darin, den Sensor durch gezielte Beeinflussung des von ihm erfaßten physikalischen Parameters auszulösen.

Eine allgemein anwendbare Möglichkeit besteht darin, das Softwareprogramm so einzurichten, daß der digitale Ausgang stets unmittelbar nach jedem Einschaltvorgang (Kaltstart) der elektronischen Datenverarbeitungseinrichtung für eine bestimmte Zeitdauer ein High-Signal ausgibt. Um die Ausgabe eines High-Signals an dem digitalen Ausgang zu bewirken, braucht in diesem Fall lediglich die Spannungsversorgung der elektronischen Datenverarbeitungseinrichtung z.B. mittels eines Zwischenschalters in der entsprechenden Leitung kurz unterbrochen zu werden.

Eine weitere allgemein anwendbare Möglichkeit besteht darin, das Softwareprogramm so einzurichten, daß der digitale Ausgang in regelmäßigen Zeitabständen ein High-Signal von bestimmter Zeitdauer ausgibt.

Eine weitere Möglichkeit besteht darin, die elektronische Datenverarbeitungseinrichtung so mit einem Taster auszustatten, daß bei dessen Betätigung die Ausgabe eines High-Signals am digitalen Ausgang erfolgt. Der Taster kann z.B. als zusätzliches Bedienelement des von der elektronischen Datenverarbeitungseinrichtung gesteuerten elektronischen Gerätes ausgebildet sein.

In einer bevorzugten Ausführungsform der Erfindung erfolgt die Dateneingabe seriell.

In einer anderen Ausführungsform der Erfindung ist die elektronische Datenverarbeitungseinrichtung mit einer Mehrzahl von Eingängen, Widerständen und Eingabeschaltern ausgestattet, so daß durch paralleles Betätigen der Eingabeschalter eine parallele Dateneingabe erfolgen kann.

In einer weiteren Ausführungsform der Erfindung weist die elektronische Datenverarbeitungseinrichtung ferner eine Mehrzahl von elektrischen oder elektronischen Schaltern auf, deren Steuereingänge jeweils mit einem der digitalen Ausgänge der elektronischen Datenverarbeitungseinrichtung, deren Signaleingänge jeweils mit einem Eingang und deren Signalausgänge jeweils über einen eigenen Eingabeschalter mit Masse verbunden sind, so daß auch eine parallele Ausgabe und somit eine bidirektionale parallele Kommunikation möglich ist.

In einer Ausführungsform der Erfindung sind diese elektrischen bzw. elektronischen Schalter bipolare Transistoren, deren Basis jeweils mit einem digitalen Ausgang der elektronischen Datenverarbeitungseinrichtung, deren Kollektoren jeweils mit einem Eingang und deren Emitter über jeweils einen eigenen Eingabeschalter mit Masse verbunden sind, oder Feldeffekt-Transistoren, deren Gate-Anschlüsse jeweils mit einem digitalen Ausgang der elektronischen Datenverarbeitungseinrichtung, deren Drain-Anschlüsse jeweils mit einem Eingang und deren Source-Anschlüsse über jeweils einen eigenen Eingabeschalter mit Masse verbunden sind.

In einer weiteren Ausführungsform der Erfindung weist die elektronische Datenverarbeitungseinrichtung ein Paar antivalenter Ausgänge auf, so daß der eine dieser Ausgänge immer dann ein High-Signal abgibt, wenn der andere dieser Ausgänge ein Low-Signal abgibt, und umgekehrt. Jeder dieser Ausgänge ist an den Steuereingang eines eigenen elektrischen bzw. elektronischen Schalters angeschlossen, wobei die Signaleingänge den beiden elektrischen bzw. elektronischen Schalter miteinander und mit dem Eingang der elektronischen Datenverarbeitungseinrichtung verbunden sind. Die Signalausgänge der beiden elektrischen bzw. elektronischen Schalter sind ebenfalls miteinander verbunden und mit dem Signaleingang des Eingabeschalters verbunden. Da somit immer am Steuereingang eines der beiden elektrischen bzw. elektronischen Schalter ein High-Signal anliegt, können durch Betätigen des Eingabeschalters immer Daten an den Eingang der elektronischen Datenverarbeitungseinrichtung gesendet werden.

In einer Ausführungsform der Erfindung werden der Eingang der elektronischen Datenverarbeitungseinrichtung sowie deren Versorgungsspannungs-Anschluß über geeignete Pegelwandler angeschlossen, so daß die Betriebsspannung des Systems weit höher sein kann als diejenige der elektronischen Datenverarbeitungseinrichtung. Der Elektronische Schalter ist hier vorteilhafterweise so ausgelegt, daß er eine Pegelanpassung vornehmen kann.

In einer weiteren Ausführungsform der Erfindung kommt ein Gegentakt-prinzip zum Einsatz, welches unten näher erläutert wird.

Die Software kann so ausgelegt sein, daß die elektronische Datenverarbeitungseinrichtung über den digitalen Ausgang nicht nur Meß- oder Schaltsignale ausgeben kann, sondern darüber hinaus auch eine Antwort als Reaktion auf die oben erläuterte Eingabe von digitalen Worten. Hierdurch kann z.B. eine Möglichkeit bereitgestellt werden, die Reaktion des Systems auf eine Dateneingabe unmittelbar zu verfolgen.

Beispielsweise kann die elektronische Datenverarbeitungseinrichtung durch Eingabe eines entsprechenden Befehls zur Durchführung eines System-Selbsttests veranlaßt werden und anschließend durch Eingabe weiterer Befehle die Ergebnisse des Tests ausgeben. In einem anderen Beispiel kann ein Benutzer die elektronische Datenverarbeitungseinrichtung dazu veranlassen, den Benutzer über etwa aktuell vorliegende besondere Betriebszustände, Fehlfunktionen oder über aktuelle interne Parameter zu informieren. In einem weiteren Beispiel können durch eine entsprechende Eingabe gezielt spezielle Daten, wie z.B. den Inhalt einer bestimmten Speicheradresse, aus dem System abgerufen werden, was z.B. für eine Ferndiagnose des Systems bei Betriebsstörungen hilfreich sein kann.

Die Software ist vorzugsweise so eingerichtet, daß das System durch Eingabe eines bestimmten Codewortes in einen Kommunikationsmodus versetzt wird, in welchem die Ausgabe von routinemäßigen digitalen Signalen, wie z.B. Schaltsignalen oder Meßwerten, unterbrochen ist, um eine Interferenz mit den vom System evtl. als Antwort auf eine Eingabe ausgegebenen digitalen Signalen zu vermeiden. Dabei kann der Kommunikationsmodus erst dann verlassen und die Ausgabe der routinemäßigen digitalen Signale erst dann wieder aufgenommen werden, wenn ein entsprechender Befehl eingegeben wurde. Eine andere Möglichkeit besteht darin, die Software so auszulegen, daß das System den Kommunikationsmodus selbsttätig verläßt, wenn während einer definierten Zeitspanne weitere Eingaben ausbleiben.

Die Software kann dabei ferner so eingerichtet sein, daß die routinemäßig auszugebenden digitalen Signale in einem Speicher zwischengespeichert werden, solange sich das System im Kommunikationsmodus befindet.

Die Erfindung besitzt die Vorteile, dass mit ihr eine Parametrierung und ein Abgleich von Geräten, wie Sensoren mit Mikrokontrolern, ohne zusätzlichen Hardwareaufwand möglich ist, wie auch eine Kommunikation während des Betriebes stattfinden kann; ebenso kann das Gerät auch vergossen sein. Die Parametrierung eines Gerätes kann auch durch den Kunden/Anwender durchgeführt werden. Das Verfahren ist einfach zu reatisieren und die Vorrichtung weist einen geringen Schaltungsaufwand auf. Ebenso sind keine zusätzlichen elektrischen Verbindungen notwendig.

Kurzbeschreibung der Zeichnung, in der bevorzugte Ausführungsformen der Erfindung schematisch dargestellt sind. Es zeigen:
- Fig.1: eine der vorliegenden Erfindung nicht unterfallende schematische Schaltung zur seriellen Dateneingabe in einen Mikrokontroler,
- Fig.2: eine der vorliegenden Erfindung ebenfalls nicht unterfallende schematische Schaltung zur seriellen Dateneingabe und Datenausgabe in einen bzw. aus einem Mikrokontroler.
- Fig.3: eine schematische Schaltung zur seriellen Dateneingabe und Datenausgabe in einen bzw. aus einem Mikrokontroler gemäß einer weiteren Ausführungsform der Erfindung, und
- Fig.4: eine schematische Schaltung zur seriellen Dateneingabe und Datenausgabe in einen bzw. aus einem Mikrokontroler gemäß einer bevorzugten Ausführungsform der Erfindung,
- Fig.5: eine schematische Schaltung zur seriellen Dateneingabe, und Datenausgabe in einen bzw. aus einem Mikrokontroler gemäß einer auf einem Gegentaktprinzip beruhenden Ausführungsform der Erfindung und
- Fig.6: eine schematische Schaltung zur seriellen Dateneingabe und Datenausgabe in einen bzw. aus einem Mikrokontroler gemäß einer weiteren Ausführungsform der Erfindung.

### Wege zur Ausführung:

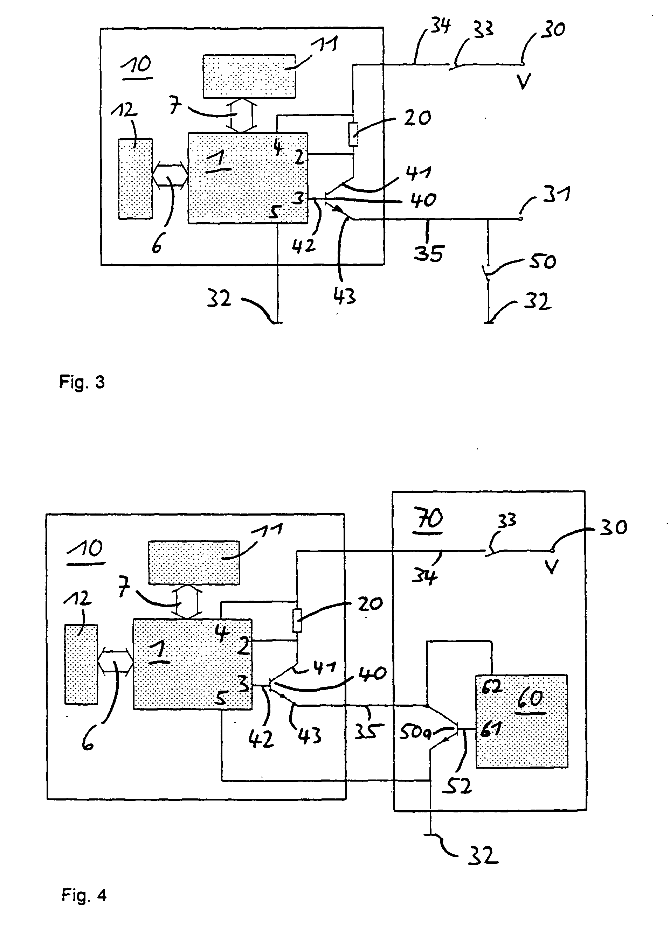

In folgenden werden unter Bezug auf die Figuren 3-6 verschiedene Varianten einer Ausführungsform der Erfindung erläutert, in der die elektronische Datenverarbeitungseinrichtung ein Mikrokontroler mit einer Low-aktiven Interrupteinrichtung und einem Interrupteingang ist, d.h. die Interrupteinrichtung ist aktiviert, wenn die am Interrupteingang anliegende Spannung geringer ist als ein bestimmter Spannungswert, und die Interrupteinrichtung ist nicht aktiviert, wenn die am Interrupteingang anliegende Spannung größer ist als der bestimmte Spannungswert. Der Interrupteingang wird als Eingang gemäß der Oberbegriffe von Anspruch 1 und 17 benutzt. In den erläuterten Ausführungsformen der Erfindung steuert der Mikrokontroler jeweils einen Sensor.

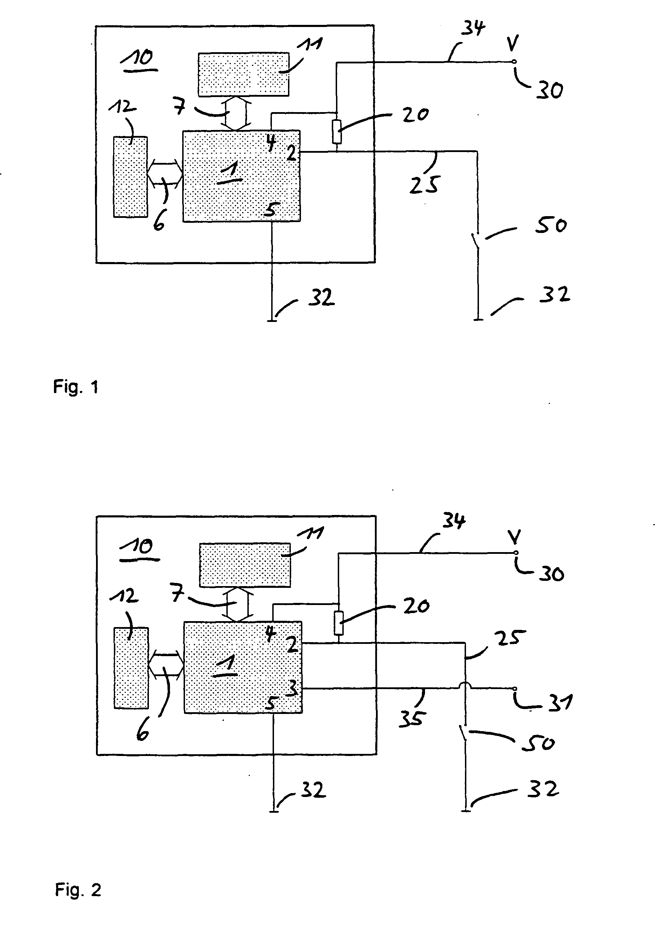

Fig. 1 zeigt ein der vorliegenden Erfindung nicht unterfallendes Blockschaltbild zur seriellen Dateneingabe in einen Mikrokontroler 1. Der Mikrokontroler 1 steuert einen Sensor 10 und ist über einen Bus oder Leitungen 6 mit einem Speicher 12 und über einen weiteren Bus oder Leitungen 7 mit einem Aufnehmer 11 für die durch den Sensor 10 erfaßten physikalischen Größen verbunden. Der Aufnehmer 11 kann z.B. ein induktiver Näherungsschalter oder ein elektrischer Temperaturaufnehmer sein. Der Mikrokontroler 1 ist ferner über einen Anschluß für Versorgungsspannung 4 und eine Versorgungsleitung 34 an eine Spannungsquelle 30 der Spannung V und über einen Masseanschluß 5 an Masse 32 angeschlossen.

Der Interrupteingang 2 des Mikrokontrolers 1 ist über einen Widerstand 20 mit der Spannungsquelle 30 verbunden. Gleichzeitig ist der Interrupteingang 2 des Mikrokontrolers 1 in der in Fig. 1 gezeigten Ausführungsform an eine Eingabeleitung 25 angeschlossen, die über den an einem entfernten Ort angeordneten Eingabeschalter 50 an Masse 32 gelegt ist.

Da der Eingangswiderstand des Interrupteingangs 2 relativ hochohmig ist, liegt bei geeigneter Wahl des Ohmwertes des Widerstandes 20 die von der Spannungsquelle 30 abgegebene Spannung in annähernd voller Höhe am Interrupteingang 2 an, sofern der Eingabeschalter 50 geöffnet ist. Die Interrupteinrichtung des Mikrokontrolers 1 ist, da hier Low-aktiv, in diesem Fall nicht aktiv.

Bei geschlossenem Eingabeschalter 50 hingegen liegt zwischen dem Interrupteingang 2 und Masse 32 ein Kurzschluß vor. Die Spannung V fällt näherungsweise vollständig am Widerstand 20 ab, so daß am Interrupteingang 2 praktisch keine Spannung anliegt. Die Interrupteinrichtung des Mikrokontrolers 1 ist in diesem Fall aktiv.

Durch Betätigen des Eingabeschalters 50 können somit, wie oben beschrieben, bei geeigneter Auslegung der in dem Mikrokontroler 1 ablaufenden Software über die Eingabeleitung 25 von einem entfernten Ort aus Daten in den Mikrokontroler 1 eingegeben werden, welche programmgemäß dem Sensor 10 übermittelt werden oder diesen entsprechend verändert steuern bzw, beeinflussen.

Fig. 2 zeigt ein ebenfalls nicht der vorliegenden Erfindung unterfallendes Blockschaltbild zur seriellen Dateneingabe in einen Mikrokontroler 1. Die Schaltung von Fig. 2 weist gegenüber derjenigen von Fig. 1 zusätzlich eine Ausgabeleitung 35 auf, die an einem digitalen Ausgang 3 des Mikrokontrolers 1 angeschlossen ist und dazu dient, digitale Signale aus dem Mikrokontroler 1 auszugeben. Diese digitalen Signale können z.B. Meßwerte sein, die der Aufnehmer 11 des Sensors 10 liefert. Die von dem Mikrokontroler 1 ausgegebenen digitalen Signale stehen über die Ausgabeleltung 35 an einem entfernten Ort an einer Klemme 31 zur Verfügung.

Die Software des Mikrokontrolers 1 ist nunmehr so ausgelegt, daß der Mikrokontroler 1 auf eine Eingabe von bestimmten digitalen Worten über die Eingabeleitung 25 über den digitalen Ausgang 3 und die Ausgabeleitung 35 digitale Signale ausgibt, aufgrund derer die Reaktion des Sensors auf die Eingabe verfolgt werden kann.

In vielen Systemen ist eine Ausgabeleitung 35 standardmäßig installiert, so daß die zusätzliche Installation einer Ausgabeleitung 35 entfällt.

Die Fig. 3-4 zeigen Ausführungsformen der Erfindung, in welchen Transistoren als elektronische Schalter eingesetzt sind.

Fig. 3 zeigt ein weiteres Blockschaltbild zur seriellen Dateneingabe in einen Mikrokontroler 1, in der im Gegensatz zu den in Fig. 1 und Fig. 2 gezeigten Ausführungsformen vorteilhafterweise keine separate Eingabeleitung 25 benötigt wird. Der Sensor 10 weist zusätzlich einen Transistor 40 auf, der ein bipolarer Transistor mit Kollektor 41, Basis 42 und Emitter 43 ist. In einer anderen Ausführungsform ist der Transistor 40 ein Feldeffekt-Transistor mit Drain, Gate und Source.

Erfindungsgemäß sind in der in Fig. 3 gezeigten Ausführungsform die Basis 42 mit dem digitalen Ausgang 3 des Mikrokontrolers 1, der Kollektor 41 mit dem Interrupteingang 2 des Mikrokontrolers 1 und der Emitter 43 mit der Ausgabeleitung 35 verbunden. Die Ausgabeleitung 35 ist in der in Fig. 3 gezeigten Ausführungsform über den Eingabeschalter 50, der sich an einem entfernten Ort befinden kann, an Masse 32 gelegt. Im Gegensatz zu den in Fig. 1 und Fig. 2 gezeigten Ausführungsformen ist demnach in der in Fig. 3 gezeigten Ausführungsform der Interrupteingang 2 auf dem Umweg über die Kollektor-Emitter-Strecke des Transistors 40 über den Eingabeschalter 50 an Masse 32 gelegt. Der Transistor 40 ist so ausgelegt, daß er durchschaltet, wenn am digitalen Ausgang 3 der elektronischen Datenverarbeitungseinrichtung 1 ein High-Signal anliegt, welches somit auf die Basis 42 des Transistors 40 gelegt ist.

Bei geöffnetem Eingabeschalter 50 kann der digitale Ausgang 3 des Mikrokontrolers 1 über den Transistor 40 und die Ausgabeleitung 35 digitale Signale an eine Klemme 31 ausgeben. Die Interrupteinrichtung des Mikrokontrolers 1 ist in diesem Fall nicht aktiv.

Bei geschlossenem Eingabeschalter jedoch ist der Emitter 43 des Transistors 20 gegen Masse 32 kurzgeschlossen. Sofern gleichzeitig am digitalen Ausgang 3 der elektronischen Datenverarbeitungseinrichtung 1 ein High-Signal anliegt, ist somit auch der Kollektor 42 des Transistors 40 und damit der Interrupteingang 2 der elektronischen Datenverarbeitungseinrichtung 1 erfindungsgemäß praktisch gegen Masse 32 kurzgeschlossen. Die Interrupteinrichtung des Mikrokontrolers 1 ist in diesem Fall aktiv.

Der digitale Ausgang kann auf verschiedene Weisen dazu veranlaßt werden, ein High-Signal auszugeben, wie oben bereits erläutert wurde. Durch Betätigen des Eingabeschalters 50 können somit digitale Worte in den Mikrokontroler 1 eingegeben werden wie oben beschrieben, wobei die Ausgabeleitung 35 erfindungsgemäß nicht nur zur Ausgabe, sondern auch zur Eingabe von Daten verwendet wird, so daß auf eine eigene Eingabeleitung 25 (Fig. 1, Fig. 2) vorteilhafterweise verzichtet werden kann.

Wie bereits oben erläutert, ist in vielen Fällen eine Ausgabeleitung 35 bereits standardmäßig installiert. In diesen Fällen ist erfindungsgemäß eine Eingabe von Daten in den Mikrokontroler 1 vorteilhafterweise ohne zusätzliche Leitung möglich.

Fig. 4 zeigt ein Blockschaltbild zur seriellen Datenkommunikation mit einem Mikrokontroler 1 gemäß einer bevorzugten Ausführungsform der Erfindung, bei der der Eingabeschalter 50 von Fig. 3 durch einen elektronischen Eingabeschalter 50a mit einem Steueranschluß 52 ersetzt ist. Der elektronische Eingabeschalter 50a wird durch Schaltsignale, die eine in einem Programmiergerät 70 enthaltene Steuerlogik 60 über einen Schaltausgang 61 an den Steueranschluß 52 des elektronischen Eingabeschalters 50a abgibt, betätigt. Falls am digitalen Ausgang 3 des Mikrokontrolers 1 ein High-Signal anliegt, kann somit die Interrupteinrichtung des Mikrokontrolers 1 mit Hilfe der Steuerlogik 60 aktiviert und deaktiviert werden.

Die Steuerlogik 60 ist so eingerichtet, daß sie über den Schaltausgang 61 Schaltsignale in einer den in den Mikrokontroler einzugebenden Daten entsprechenden Folge abgibt. In einer bevorzugten Ausführungsform der Erfindung umfaßt die Steuerlogik 60 zu diesem Zweck eine separate Einrichtung zur elektronischen Datenverarbeitung, z.B. einen Mikroprozessor oder einen Computer, wobei die Steuerung des elektronischen Eingabeschalters 50a mit Hilfe eines geeigneten Programmes erfolgt. Die in den Mikrokontroler 1 einzugebenden Daten können in einer bevorzugten Ausführungsform der Erfindung z.B. per Tastatur direkt in die Steuerlogik 60 eingegeben werden, oder sie können aus einem Speicher abgerufen oder innerhalb der Steuerlogik 60 softwaremäßig erzeugt werden.

Bei geöffnetem Eingabeschalter 50a kann der digitale Ausgang 3 des Mikrokontrolers 1 über den Transistor 40 und die Ausgabeleitung 35 digitale Signale an eine Klemme 31 (in Fig. 4 nicht gezeigt) ausgeben. In einer Ausführungsform der Erfindung werden die digitalen Signale nicht an eine Klemme 31 ausgegeben, sondern zum Zweck der Weiterverabeitung und/oder Weiterverwendung über einen Steuerlogik-Eingang 62 an die Steuerlogik 60 übergeben.

Der digitale Ausgang 3 kann auf verschiedene Weisen dazu veranlaßt werden, ein High-Signal auszugeben, wie oben bereits erläutert wurde. Das Softwareprogramm kann so eingerichtet sein, daß der digitale Ausgang 3 stets unmittelbar nach jedem Einschaltvorgang (Kaltstart) der elektronischen Datenverarbeitungseinrichtung 1 für eine bestimmte Zeitdauer ein High-Signal ausgibt. Um die Ausgabe eines High-Signals an dem digitalen Ausgang 3 zu bewirken, braucht in dieser Ausführungsform lediglich die Spannungsversorgung der elektronischen Datenverarbeitungseinrichtung 1, z.B. mittels eines Zwischenschalters 33 in der Versorgungsspannungsleitung 34, kurz unterbrochen zu werden.

Durch Betätigen des Eingabeschalters 50, 50a können somit digitale Worte in den Mikrokontroler 1 eingegeben werden wie oben beschrieben, wobei in den unter Bezug auf Fig. 3 und Fig. 4 erläuterten Ausführungsformen der Erfindung die Ausgabeleitung 35 erfindungsgemäß nicht nur zur Ausgabe, sondern auch zur Eingabe von Daten verwendet wird, so daß auf eine eigene Eingabeleitung 25 (Fig. 1, Fig. 2) vorteilhafterweise verzichtet werden kann.

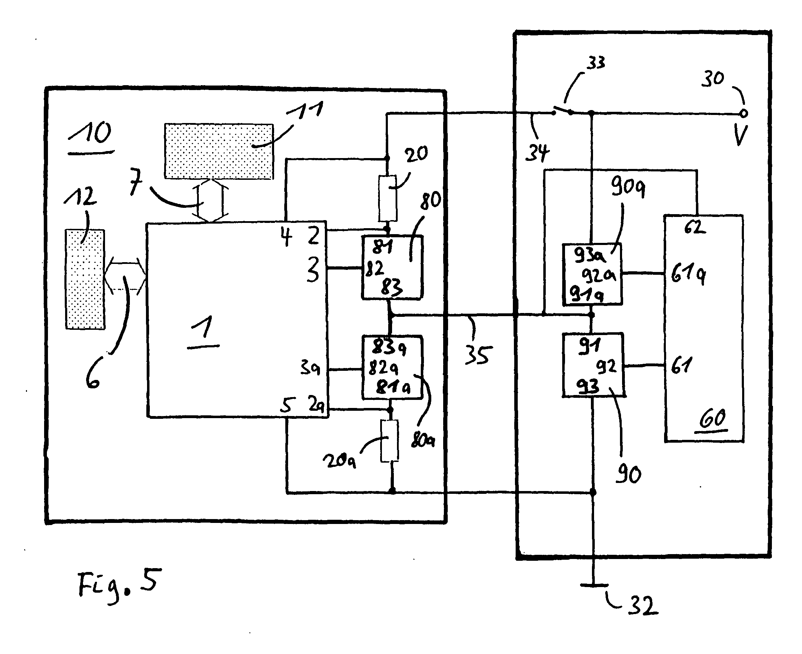

Fig. 5 zeigt eine schematische Schaltung zur seriellen Dateneingabe und Datenausgabe in einen bzw. aus einem Mikrokontroler gemäß einer auf einem Gegentakt-Prinzip beruhenden Ausführungsform der Erfindung.

Der Mikrokontroler 1 weist in dieser Ausführungsform der Erfindung zwei Eingänge 2, 2a auf, die bevorzugt Interrupt-Eingänge sind, sowie zwei digitale Ausgänge 3, 3a, die so eingerichtet sind, daß der eine immer dann ein High Signal abgibt, wenn der andere ein Low-Signal abgibt, und umgekehrt. Jeder der Ausgänge 3, 3a ist an den Steuereingang 82, 82a eines eigenen elektrischen bzw. elektronischen Schalters 80, 80a angeschlossen. Diese Ausführungsform der Erfindung weist ferner zwei Widerstände 20, 20a und zwei elektronische Eingabeschalter 90, 90a auf, deren Steuereingänge 91, 91a von je einem eigenen Ausgang 61, 61a der Steuerlogik 60 angesteuert werden.

Der Signaleingang 81 des ersten elektronischen Schalters 80 ist mit dem ersten Eingang 2 und über den ersten Widerstand 20 mit der Versorgungsspannung 30 verbunden.

Der Signaleingang 81a des zweiten elektronischen Schalters 80a ist mit dem zweiten Eingang 2a und über den zweiten Widerstand 20a mit Masse 32 verbunden. Der Signalausgang 83 des ersten elektronischen Schalters 80 ist mit dem Signalausgang 83a des zweiten elektronischen Schalters 80a sowie über die Ausgabeleitung 35 mit den Signaleingängen 91, 91a der Eingabeschalter 90, 90a verbunden. Der Signalausgang 93 des ersten Eingabeschalters 90 ist mit Masse 32 verbunden. Der Signalausgang 93a des zweiten Eingabeschalters 90a ist mit der Versorgungsspannung 30 verbunden.

In jedem Zustand des Mikrokontrolers 1 gibt einer der digitalen Ausgänge 3, 3a ein High-Signal ab, so daß immer einer der elektronischen Schalter 80, 80a geschlossen bzw. durchgeschaltet ist. Wenn der erste elektronische Schalter 80 geschlossen bzw. durchgeschaltet ist, kann eine Dateneingabe in den ersten Eingang 2 durch Betätigen des ersten Eingabeschalters 90 erfolgen. Wenn der zweite elektronische Schalter 80a geschlossen bzw. durchgeschaltet ist, kann eine Dateneingabe in den zweiten Eingang 2a durch Betätigen des zweiten Eingabeschalters 90a erfolgen. Daher ist mit der in Fig. 5 erfindungsgemäß jederzeit eine Dateneingabe möglich, entsprechend geeignete Programmierung des Mikrokontrolers 1, insbesondere Abfrage des jeweils betreffenden Einganges 2, 2a, vorausgesetzt.

In einer bevorzugten Ausführungsform der Erfindung stellt die Steuerlogik 60 durch jeweilige Messung der Stromflusses durch ihre Ausgänge 61, 61a automatisch fest, welcher der beiden elektronischen Schalter 80, 80a gerade geöffnet ist und sorgt dafür, daß bei Dateneingabe nur der entsprechende Eingabeschalter betätigt wird.

Wie bereits oben erläutert, ist in solchen Fällen, in denen es zur Aufgabe des elektronischen Gerätes 10 gehört, digitale Signale wie z.B. ein Schaltsignal oder Meßwerte auszugeben, zum bestimmungsgemäßen Betrieb des elektronischen Gerätes 10 eine Ausgabeleitung ohnehin 35 erforderlich. In diesen Fällen ist gemäß den unter Bezug auf Fig. 3 bis Fig. 5 erläuterten Ausführungsformen erfindungsgemäß eine Eingabe und Ausgabe von Daten in den bzw. aus dem Mikrokontroler 1 von einem entfernten Ort aus vorteilhafterweise ohne zusätzliche Leitung möglich.

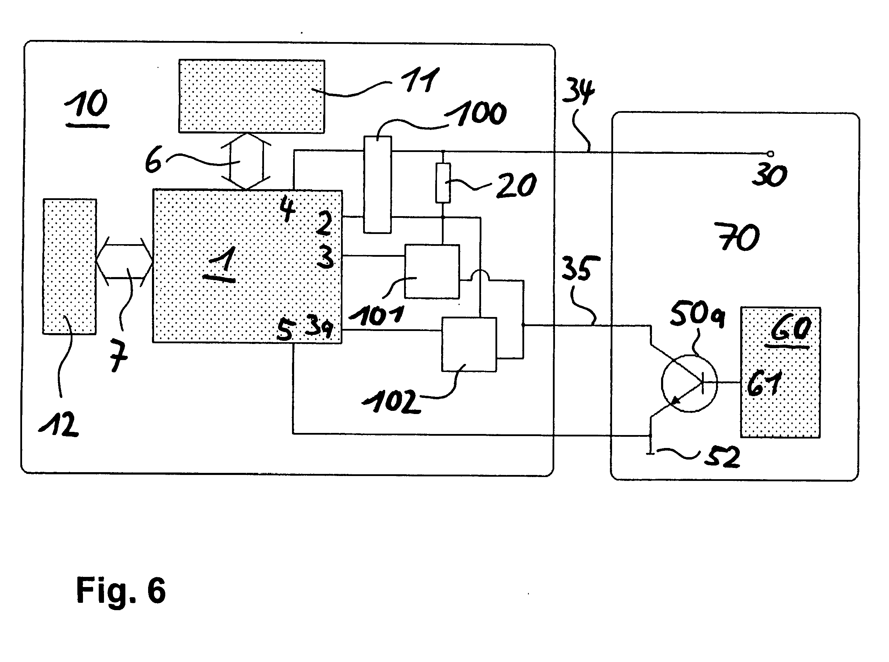

In einer weiteren Ausführungsform der Erfindung (Fig. 6) weist die elektronische Datenverarbeitungseinrichtung 1 ein Paar antivalenter Ausgänge 3, 3a auf, so daß der eine dieser Ausgänge 3, 3a immer dann ein High-Signal abgibt, wenn der andere dieser Ausgänge 3,3a ein Low-Signal abgibt, und umgekehrt. Jeder dieser Ausgänge 3,3a ist an den Steuereingang eines eigenen elektrischen bzw. elektronischen Schalters 101, 102 angeschlossen, wobei die Signaleingänge der beiden elektrischen bzw. elektronischen Schalter 102, 102 miteinander und mit dem Eingang 2 der elektronischen Datenverarbeitungseinrichtung 1 verbunden sind. Die Signalausgänge der beiden elektrischen bzw. elektronischen Schalter 101, 102 sind ebenfalls miteinander verbunden und mit dem Signaleingang des Eingabeschalters 50a verbunden. Da somit immer am Steuereingang eines der beiden elektrischen bzw. elektronischen Schalter 101, 102 ein High-Signal anliegt, können durch Betätigen des Eingabeschalters 50a immer Daten an den Eingang der elektronischen Datenverarbeitungseinrichtung 1 gesendet werden.

In einer Weiterbildung dieser Ausführungsform der Erfindung werden der Eingang 2 der elektronischen Datenverarbeitungseinrichtung 1 sowie deren Versorgungsspannungs-Anschluß 4 über geeignete Pegelwandler 100 angeschlossen, so daß die Betriebspannung des Systems weit höher sein kann als diejenige der elektronischen Datenverarbeitungseinrichtung 1. Die elektronischen Schalter 101, 102 sind hierbei vorteilhafterweise so ausgelegt, daß sie eine geeignete Pegelanpassung vornehmen können.

### Gewerbliche Anwendbarkeit:

Die Erfindung ist insbesondere zur seriellen Datenkommunikation zwischen einem Sensor, wie Näherungsschalter, und einer Datenverarbeitungseinrichtung, wie Programmiergerät oder Mikrokontroler, gewerblich anwendbar.

### Bezugszeichenliste:

- 1: Mikrokontroler
- 2, 2a: Interrupteingänge
- 3, 3a: digitale Ausgänge
- 4: Anschluß für Versorgungsspannung
- 5: Anschluß für Masse
- 6: Busverbindung zum Speicher
- 7: Busverbindung zum Meßaufnehmer
- 10: Sensor
- 11: Aufnehmer
- 12: Speicher
- 20,20a: Widerstände
- 25: Eingabeleitung
- 30: Spannungsquelle
- 31: Klemme
- 32: Masse
- 33: Zwischenschalter
- 34: Spannungsversorgungsleitung
- 35: Ausgabeleitung
- 40: Transistor
- 41: Kollektor des Transistors
- 42: Basis des Transistors
- 43: Emitter des Transistors
- 50: Eingabeschalter
- 50a: elektronischer Eingabeschalter
- 52: Steueranschluß der Eingabeschalters
- 60: Steuerlogik
- 61,61a: Ausgänge der Steuerlogik
- 62: Steuerlogik Eingang
- 70: Programmiergerät
- 80,80a: elektronische Schalter
- 81,81a: Signaleingänge von 80, 80a
- 82,82a: Steuereingänge von 80, 80a
- 83,83a: Signalausgänge vom 80, 80a
- 90,90a: Eingabeschalter
- 91,91a: Signaleingänge von 90, 90a
- 92,92a: Steuereingänge von 90, 90a
- 93,93a: Signalausgänge vom 90, 90a
- 100: Pegelwandler
- 101,102: elektronische Schalter

## Patentansprüche

1. Verfahren zur Datenkommunikation mit einer wenigstens ein elektronisches Gerät (10) steuernden elektronischen Datenverarbeitungseinrichtung (1), welche einen Eingang (2) und einen digitalen Ausgang (3), über welchen eine Datenausgabe erfolgen kann, aufweist und in welcher ein Datenverarbeitungsprogramm in einer ständigen Schleife abläuft, das zyklisch abfragt, ob an dem Eingang (2) eine Spannung anliegt, die größer bzw. kleiner ist als ein bestimmter Spannungswert,
wobei eine Spannung, die über dem bestimmten Spannungswert liegt, über einen Widerstand (20) an den Eingang (2) angelegt wird, der über einen Eingabeschalter (50, 50a) an Masse (32) oder einen anderen Spannungspol gelegt ist, so daß der Spannungsabfall am Widerstand (20) durch den Schaltzustand des Eingabeschalters (50, 50a) so beeinflußt ist, daß die am Eingang (2) anliegende Spannung bei geöffnetem Eingabeschalter (50, 50a) größer und bei geschlossenem Eingabeschalter (50, 50a) kleiner ist als der bestimmte Spannungswert,
wobei das Datenverarbeitungsprogramm aus Abfragen, ob die am Eingang (2) anliegende Spannung größer oder kleiner ist als der bestimmte Spannungswert, eine digitale Information bildet, welche ausgegeben oder mit welcher das elektronische Gerät (10) angesteuert werden kann, so daß durch Betätigen des Eingabeschalters (50, 50a) eine Dateneingabe in die elektronische Datenverarbeitungseinrichtung (1) erfolgen kann,
**dadurch gekennzeichnet, daß**
- der digitale Ausgang (3) an den Steuereingang (42) eines elektronischen Schalters (40) angeschlossen ist, dessen Signaleingang (41) mit dem Eingang (2) und dessen Signalausgang (43) über den Eingabeschalter (50, 50a) mit Masse (32) verbunden ist,
- und die Dateneingabe und die Datenausgabe zeitlich gegeneinander versetzt über eine gemeinsame Ausgabeleitung (35) erfolgen.

2. Verfahren nach Anspruch 1, **dadurch gekennzeichnet,**
**daß** die elektronische Datenverarbeitungseinrichtung (1) eine Interrupteinrichtung aufweist und der Eingang (2) ein Interrupteingang ist, wobei der bestimmte Spannungswert so gewählt ist, daß sich die Interrupteinrichtung in einer Stellung des Eingabeschalters (50, 50a) im aktiven und in der anderen Stellung des Eingabeschalters (50, 50a) nicht im aktiven Zustand befindet.

3. Verfahren nach Anspruch 1, **dadurch gekennzeichnet, daß**
das elektronische Gerät (10) ein Sensor ist.

4. Verfahren nach Anspruch 1 oder 2, **dadurch gekennzeichnet, daß**
die elektronische Datenverarbeitungseinrichtung (1) ein Mikrokontroler oder eine programmierbare Logik ist.

5. Verfahren nach Anspruch 1, **dadurch gekennzeichnet,**
**daß** die elektronische Datenverarbeitungseinrichtung (1) einen digitalen Ausgang (3) und entweder einen bipolaren Transistor (40) aufweist, dessen Basis (42) mit dem digitalen Ausgang (3) der elektronischen Datenverarbeitungseinrichtung (1), dessen Kollektor (41) mit dem Eingang (2) und dessen Emitter (43) über den Eingabeschalter (50, 50a) mit Masse (32) verbunden ist, oder einen Feldeffekt-Transistor (40) aufweist, dessen Gate-Anschluß mit dem digitalen Ausgang (3) der elektronischen Datenverarbeitungseinrichtung (1), dessen Drain-Anschluß (41) mit dem Eingang (2) und dessen Source-Anschluß (43) über den Eingabeschalter (50, 50a) mit Masse (32) verbunden ist.

6. Verfahren nach Anspruch 1 oder 5, **dadurch gekennzeichnet,**
**daß** der digitale Ausgang (3) unmittelbar oder eine bestimmte Zeitspanne nach jedem Einschaltvorgang der elektronischen Datenverarbeitungseinrichtung (1) für eine bestimmte Zeitdauer ein High-Signal ausgibt.

7. Verfahren nach Anspruch 1 oder 5, **dadurch gekennzeichnet,**
**daß** der digitale Ausgang (3) in regelmäßigen Zeitabständen ein High-Signal von bestimmter Zeitdauer ausgibt.

8. Verfahren nach Anspruch 1, **dadurch gekennzeichnet,**
**dass** durch einen vorher eindeutig definierten Code das elektronische Gerät (10) in den Kommunikationsmodus mit der elektronischen Datenverarbeitungseinrichtung (1) gebracht wird.

9. Verfahren nach Anspruch 1, **dadurch gekennzeichnet,**
**dass** die elektronischen Datenverarbeitungseinrichtung (1) durch Eingabe entsprechender Daten dazu veranlaßt werden kann, über den digitalen Ausgang (3) Daten auszugeben.

10. Verfahren nach Anspruch 1 , **dadurch gekennzeichnet,**
**dass** die elektronische Datenverarbeitungseinrichtung (1) mit einer Mehrzahl von Eingängen (2), Widerständen (20), Eingabeleitungen (25) und Eingabeschaltern (50) versehen ist, mit deren Hilfe eine parallele Dateneingabe erfolgen kann.

11. Verfahren nach Anspruch 1, **dadurch gekennzeichnet,**
**daß** die elektronische Datenverarbeitungseinrichtung (1) mit einer Mehrzahl von digitalen Ausgängen (3) versehen ist, mit deren Hilfe eine parallele Datenausgabe erfolgen kann.

12. Verfahren nach Anspruch 10 und 11, **dadurch gekennzeichnet,**
**daß** die elektronische Datenverarbeitungseinrichtung (1) eine Mehrzahl von elektronischen Schaltern aufweist, deren Steuereingänge jeweils mit einem der digitalen Ausgänge (3) der elektronischen Datenverarbeitungseinrichtung (1), deren Signaleingänge jeweils einem Eingang (2) und deren Signalausgänge jeweils über einen Eingabeschalter (50, 50a) mit Masse (32) verbunden sind.

13. Verfahren nach Anspruch 1, **dadurch gekennzeichnet,**
**daß** die elektronische Datenverarbeitungseinrichtung (1) eine Mehrzahl von bipolaren Transistoren (40) aufweist, deren Basis (42) jeweils mit einem digitalen Ausgang (3) der elektronischen Datenverarbeitungseinrichtung (1), deren Kollektoren (41) jeweils mit einem Eingang (2) und deren Emitter (43) über jeweils einen Eingabeschalter (50, 50a) mit Masse (32) verbunden sind, oder eine Mehrzahl von Feldeffekt-Transistoren (40) aufweist, deren Gate-Anschlüsse jeweils mit einem digitalen Ausgang (3) der elektronischen Datenverarbeitungseinrichtung (1), deren Drain-Anschlüsse (41) jeweils mit einem Eingang (2) und deren Source-Anschlüsse (43) über jeweils einen Eingabeschalter (50, 50a) mit Masse (32) verbunden sind.

14. Verfahren nach Anspruch 1, **dadurch gekennzeichnet,**
**daß** die elektronische Datenverarbeitungseinrichtung (1) ein Paar antivalenter Ausgänge aufweist, so daß der eine dieser Ausgänge immer dann ein High-Signal abgibt, wenn der andere dieser Ausgänge ein Low-Signal abgibt, und umgekehrt, wobei jeder dieser Ausgänge an den Steuereingang eines eigenen elektrischen bzw. elektronischen Schalters angeschlossen ist, wobei die Signaleingänge den beiden elektrischen bzw. elektronischen Schalter miteinander und mit dem Eingang (2) der elektronischen Datenverarbeitungseinrichtung (1) verbunden sind und die Signalausgänge der beiden elektrischen bzw. elektronischen Schalter miteinander und mit dem Signaleingang des Eingabeschalters (50, 50a) verbunden sind, so daß immer am Steuereingang eines der beiden elektrischen bzw. elektronischen Schalter ein High-Signal anliegt und durch Betätigen des Eingabeschalters (50, 50a) immer Daten an den Eingang (2) der elektronischen Datenverarbeitungseinrichtung gesendet (1) werden können.

15. Verfahren nach Anspruch 1, **dadurch gekennzeichnet,**
**daß** der Mikrokontroler (1) zwei Eingänge (2, 2a) und zwei digitale Ausgänge (3, 3a) aufweist, von denen der erste digitale Ausgang (3) immer dann ein High-Signal abgibt, wenn der andere digitale Ausgang (3a) ein Low-Signal abgibt, und umgekehrt, wobei jeder der digitalen Ausgänge (3, 3a) nach einem Gegentaktprinzip den Steuereingang (82, 82a) eines eigenen elektrischen bzw. elektronischen Schalters (80, 80a) angeschlossen ist, wobei der Signaleingang (81) des ersten elektronischen Schalters (80) ist mit dem ersten Eingang (2) und über einen ersten Widerstand (20) mit der Versorgungsspannung (30) verbunden und der Signaleingang (81a) des zweiten elektronischen Schalters (80a) mit dem zweiten Eingang (2a) und über den zweiten Widerstand (20a) mit Masse (32) verbunden ist, wobei der Signalausgang (83) des ersten elektronischen Schalters (80) ist mit dem Signalausgang (83a) des zweiten elektronischen Schalters (80a) sowie über die Ausgabeleitung (35) mit den Signaleingängen (91, 91a) eines ersten und eines zweiten Eingabeschalters (90, 90a) verbunden ist, wobei der Signalausgang des ersten Eingabeschalters (90) mit Masse (32) und der Signalausgang des zweiten Eingabeschalters (90a) ist mit der Versorgungsspannung (30) verbunden ist und die Steuereingänge (91, 91a) der Eingabeschalter (90, 90a) von je einem eigenen Ausgang (61, 61a) der Steuerlogik (60) angesteuert werden, so daß entweder über den ersten Eingang (2), den ersten elektronischen Schalter (80) und den ersten Eingabeschalter (90) oder über den zweiten Eingang (2a), den zweiten elektronischen Schalter (80a) und den zweiten Eingabeschalter (90a) jederzeit eine Dateneingabe möglich ist.

16. Verfahren nach Anspruch 15, **dadurch gekennzeichnet,**
**daß** die Steuerlogik (60) durch jeweilige Messung der Stromflusses durch ihre Ausgänge (61, 61a) automatisch feststellt, welcher der beiden elektronischen Schalter (80, 80a) gerade geöffnet ist und dafür sorgt, daß bei Dateneingabe nur der entsprechende Eingabeschalter (90, 90a) betätigt wird.

17. Vorrichtung zur seriellen Datenkommunikation mit einer wenigstens ein elektronisches Gerät (10) steuernden elektronischen Datenverarbeitungseinrichtung (1), welche einen Eingang (2) und einen digitalen Ausgang (3), über welchen eine Datenausgabe erfolgen kann, aufweist und in welcher ein Datenverarbeitungsprogramm in einer ständigen Schleife abläuft, das zyklisch abfragt, ob an dem Eingang (2) eine Spannung anliegt, die größer bzw. kleiner ist als ein bestimmter Spannungswert,
wobei eine Spannung, die über dem bestimmten Spannungswert liegt, über einen Widerstand (20) an den Eingang (2) angelegt wird, der über einen Eingabeschalter (50, 50a) an Masse (32) gelegt ist, so daß der Spannungsabfall am Widerstand (20) durch den Schaltzustand des Eingabeschalters (50, 50a) so beeinflußt ist, daß die am Eingang (2) anliegende Spannung bei geöffnetem Eingabeschalter (50, 50a) größer und bei geschlossenem Eingabeschalter (50, 50a) kleiner ist als der bestimmte Spannungswert,
wobei das Datenverarbeitungsprogramm aus Abfragen, ob die am Eingang (2) anliegende Spannung größer oder kleiner ist als der bestimmte Spannungswert, eine digitale Information bildet, welche ausgegeben oder mit welcher das elektronische Gerät (10) angesteuert werden kann, so daß durch Betätigen des Eingabeschalters (50, 50a) eine Dateneingabe in die elektronische Datenverarbeitungseinrichtung (1) erfolgen kann,
**dadurch gekennzeichnet, daß**
- der digitale Ausgang (3) an den Steuereingang (42) eines elektronischen Schalters (40) angeschlossen ist, dessen Signaleingang (41) mit dem Eingang (2) und dessen Signalausgang (43) über den Eingabeschalter (50, 50a) mit Masse (32) verbunden ist,
- und die Dateneingabe und die Datenausgabe zeitlich gegeneinander versetzt über eine gemeinsame Ausgabeleitung (35) erfolgen.

18. Vorrichtung nach Anspruch 17, **dadurch gekennzeichnet,**
**daß** die elektronische Datenverarbeitungseinrichtung (1) eine Interrupteinrichtung aufweist und der Eingang (2) ein Interrupteingang ist, wobei der bestimmte Spannungswert so gewählt ist, daß sich die Interrupteinrichtung in einer Stellung des Eingabeschalters (50, 50a) im aktiven und in der anderen Stellung des Eingabeschalters (50, 50a) nicht im aktiven Zustand befindet.

19. Vorrichtung nach Anspruch 17, **dadurch gekennzeichnet,**
**daß** die elektronische Datenverarbeitungseinrichtung (1) einen digitalen Ausgang (3) und entweder einen bipolaren Transistor (40) aufweist, dessen Basis (42) mit dem digitalen Ausgang (3) der elektronischen Datenverarbeitungseinrichtung (1), dessen Kollektor (41) mit dem Eingang (2) und dessen Emitter (43) über den Eingabeschalter (50, 50a) mit Masse (32) verbunden ist, oder einen elektrischen oder elektronischen Schalter wie z.B. einen Feldeffekt-Transistor (40) aufweist, dessen Gate-Anschluß mit dem digitalen Ausgang (3) der elektronischen Datenverarbeitungseinrichtung (1), dessen Drain-Anschluß (41) mit dem Eingang (2) und dessen Source-Anschluß (43) über den Eingabeschalter (50, 50a) mit Masse (32) verbunden ist.

20. Vorrichtung nach Anspruch 17, **dadurch gekennzeichnet,**
**daß** die elektronische Datenverarbeitungseinrichtung (1) einen Mikrokontroler oder einen Mikroprozessor oder eine programmierbare Logik umfaßt.

21. Vorrichtung nach Anspruch 17, **dadurch gekennzeichnet,**
**daß** der Eingabeschalter (50, 50a) ein elektronischer Eingabeschalter (50a) ist, der durch eine Steuerlogik (60) betätigt wird.

22. Vorrichtung nach Anspruch 17, **dadurch gekennzeichnet, daß**
das elektronische Gerät (10) ein Sensor ist.

23. Vorrichtung nach Anspruch 17 oder 18, **dadurch gekennzeichnet, daß**
die elektronische Datenverarbeitungseinrichtung (1) ein Mikrokontroler oder eine programmierbare Logik ist.

## Claims

1. Method for data communication with a data processing device (1) which controls at least one electronic device (10), which has an input (2) and a digital output (3) via which data can be output and in which a data processing program runs in a continuous loop that cyclically queries whether a voltage that is greater or smaller than a specific voltage value is present at the input (2),
whereby a voltage that lies above the specific voltage value is applied via a resistor (20) to the input (2) that is connected via an input switch (50, 50a) to the ground (32) or to another voltage pole, so that the voltage drop at the resistor (20) is influenced by the switching state of the input switch (50, 50a) in such a way that the voltage present at the input (2) is higher than the specific voltage value when the input switch (50, 50a) is open, and is lower than the specific voltage value when the input switch (50, 50a) is closed,
whereby, on the basis of queries as to whether the voltage present at the input (2) is higher or lower than the specific voltage value, the data processing program generates digital information that either can be output or can control the electronic device (10), so that, through the actuation of the input switch (50, 50a), data can be input into the electronic data processing device (1),
**characterized in that**
- the digital output (3) is connected to the control input (42) of an electronic switch (40) whose signal input (41) is connected to the input (2) and whose signal output (43) is connected to the ground (32) via the input switch (50, 50a),
- and the data input and data output take place at staggered times via a shared output line (35).

2. The method according to Claim 1, **characterized in that**
the electronic data processing device (1) has an interrupter and the input (2) is an interrupt input, whereby the specific voltage value is selected in such a way that the interrupter is in the active state in one position of the input switch (50, 50a) and in the non-active state in the other position of the input switch (50, 50a).

3. The method according to Claim 1, **characterized in that**
the electronic device (10) is a sensor.

4. The method according to Claim 1 or 2, **characterized in that**
the electronic data processing device (1) is a microcontroller or a programmable logic unit.

5. The method according to Claim 1, **characterized in that**
the electronic data processing device (1) has a digital output (3) and either a bipolar transistor (40) whose base (42) is connected to the digital output (3) of the electronic data processing device (1), whose collector (41) is connected to the input (2), and whose emitter (43) is connected to the ground (32) via the input switch (50, 50a), or else it has a field-effect transistor (40) whose gate terminal is connected to the digital output (3) of the electronic data processing device (1), whose drain terminal (41) is connected to the input (2), and whose source terminal (43) is connected to the ground (32) via the input switch (50, 50a).

6. The method according to Claim 1 or 5, **characterized in that**
the digital output (3) emits a high signal for a certain duration either immediately or a certain time interval after each turn-on operation of the electronic data processing device (1).

7. The method according to Claim 1 or 5, **characterized in that**
the digital output (3) emits a high signal of a certain duration at regular time intervals.

8. The method according to Claim 1, **characterized in that**
a previously unambiguously defined code is used to place the electronic device (10) in the communication mode with the electronic data processing device (1).

9. The method according to Claim 1, **characterized in that,**
through the input of appropriate data, the electronic data processing device (1) can be made to output data via the digital output (3).

10. The method according to Claim 1, **characterized in that**
the electronic data processing device (1) is provided with a plurality of inputs (2), resistors (20), input lines (25) and input switches (50) by means of which data can be input in parallel.

11. The method according to Claim 1, **characterized in that**
the electronic data processing device (1) is provided with a plurality of digital outputs (3) by means of which data can be output in parallel.

12. The method according to Claims 10 and 11, **characterized in that**
the electronic data processing device (1) has a plurality of electronic switches whose control inputs are each connected to one of the digital outputs (3) of the electronic data processing device (1) whose signal inputs are each connected to an input (2), and whose signal outputs are each connected to the ground (32) via an input switch (50, 50a).

13. The method according to Claim 1, **characterized in that**
the electronic data processing device (1) has a plurality of bipolar transistors (40) whose base (42) is connected to a digital output (3) of the electronic data processing device (1), whose collectors (41) are each connected to an input (2), and whose emitters (43) are each connected to the ground (32) via an input switch (50, 50a), or else it has a plurality of field-effect transistors (40) whose gate terminals are each connected to a digital output (3) of the electronic data processing device (1), whose drain terminals (41) are connected to an input (2), and whose source terminals (43) are each connected to the ground (32) via an input switch (50, 50a).

14. The method according to Claim 1, **characterized in that**
the electronic data processing device (1) has a pair of antivalent outputs so that one of these outputs always emits a high signal when the other output emits a low signal, and vice versa, whereby each of these outputs is connected to the control input of its own electric or electronic switch, whereby the signal inputs of the two electric or electronic switches are connected to each other and to the input (2) of the electronic data processing device (1), and the signal outputs of the two electric or electronic switches are connected to each other and to the signal input of the input switch (50, 50a), so that a high signal is always present at the control input of one of the two electric or electronic switches and so that data can always be transmitted to the input (2) of the electronic data processing device (1) by actuating the input switch (50, 50a).

15. The method according to Claim 1, **characterized in that**
the microcontroller (1) has two inputs (2, 2a) and two digital outputs (3, 3a) of which the first digital output (3) always emits a high signal when the other digital output (3a) emits a low signal, and vice versa, whereby each of the digital outputs (3, 3a) is connected according to a push-pull principle to the control input (82, 82a) of its own electric or electronic switch (80, 80a), whereby the signal input (81) of the first electric switch (80) is connected to the first input (2) and, via a first resistor (20), to the supply voltage (30), and the signal input (81a) of the second electronic switch (80a) is connected to the second input (2a) and, via the second resistor (20a), to the ground (32), whereby the signal output (83) of the first electronic switch (80) is connected to the signal output (83a) of the second electronic switch (80a) and, via the output line (35), to the signal inputs (91, 91a) of a first and a second input switch (90, 90a), whereby the signal output of the first input switch (90) is connected to the ground (32) and the signal output of the second input switch (90a) is connected to the supply voltage (30) and the control inputs (91, 91a) of the input switches (90, 90a) are each controlled by their own outputs (61, 61 a) of the control logic unit (60), so that data can always be input either via the first input (2), the first electronic switch (80) and the first input switch (90) or else via the second input (2a), the second electronic switch (80a) and the second input switch (90a).

16. The method according to Claim 15, **characterized in that,**
by constantly measuring the current flow through its outputs (61, 61a), the control logic unit (60) automatically ascertains which of the two electronic switches (80, 80a) is open at the moment, and ensures that only the appropriate input switch (90, 90a) is actuated when data is being input.

17. A device for serial data communication with a data processing device (1) which controls at least one electronic device (10), which has an input (2) and a digital output (3) via which data can be output and in which a data processing program runs in a continuous loop that cyclically queries whether a voltage that is greater or smaller than a specific voltage value is present at the input (2),
whereby a voltage that lies above the specific voltage value is applied via a resistor (20) to the input (2) that is connected via an input switch (50, 50a) to the ground (32), so that the voltage drop at the resistor (20) is influenced by the switching state of the input switch (50, 50a) in such a way that the voltage present at the input (2) is higher than the specific voltage value when the input switch (50, 50a) is open, and is lower than the specific voltage value when the input switch (50, 50a) is closed,
whereby, on the basis of queries as to whether the voltage present at the input (2) is higher or lower than the specific voltage value, the data processing program generates digital information that either can be output or can control the electronic device (10), so that, through the actuation of the input switch (50, 50a), data can be input into the electronic data processing device (1),
**characterized in that**
- the digital output (3) is connected to the control input (42) of an electronic switch (40) whose signal input (41) is connected to the input (2) and whose signal output (43) is connected to the ground (32) via the input switch (50, 50a),
- and the data input and data output take place at staggered times via a shared output line (35).

18. The device according to Claim 17, **characterized in that,**
the electronic data processing device (1) has an interrupter and the input (2) is an interrupt input whereby the specific voltage value is selected in such a way that the interrupter is in the active state in one position of the input switch (50, 50a) and in the non-active state in the other position of the input switch (50, 50a).

19. The device according to Claim 17, **characterized in that**
the electronic data processing device (1) has a digital output (3) and either a bipolar transistor (40) whose base (42) is connected to the digital output (3) of the electronic data processing device (1), whose collector (41) is connected to the input (2), and whose emitter (43) is connected to the ground (32) via the input switches (50, 50a), or else it has an electric or electronic switch such as, for instance, a field-effect transistor (40) whose gate terminal is connected to the digital output (3) of the electronic data processing device (1), whose drain terminal (41) is connected to the input (2) and whose source terminal (43) is connected to the ground (32) via the input switches (50, 50a).

20. The device according to Claim 17, **characterized in that**
the electronic data processing device (1) comprises a microcontroller or a microprocessor or a programmable logic unit.

21. The device according to Claim 17, **characterized in that**
the input switch (50, 50a) is an electronic input switch (50a) that is actuated by a control logic unit (60).

22. The device according to Claim 17, **characterized in that**
the electronic device (10) is a sensor.

23. The device according to Claim 17 or 18, **characterized in that**
the electronic data processing device (1) is a microcontroller or a programmable logic unit.

## Revendications

1. Procédé pour la communication de données avec un dispositif de traitement de données électronique (1) commandant au moins un appareil électronique (10), lequel dispositif de traitement de données présente une entrée (2) et une sortie numérique (3) via laquelle une sortie de données peut se produire, et dans lequel un programme de traitement de données se déroule dans une boucle constante, lequel demande de façon cyclique si, à l'entrée (2), une tension est appliquée qui est plus grande ou plus petite qu'une valeur de tension définie,
dans lequel une tension qui est supérieure à la valeur de tension définie est appliquée via une résistance (20) à l'entrée (2) qui est mise à la masse (32) ou à un autre pôle de tension via l'interrupteur d'entrée (50,50a), de sorte que la chute de tension à la résistance (20) est influencée par l'état de commutation de l'interrupteur d'entrée (50,50a), de sorte que la tension appliquée à l'entrée (2) est plus grande que la valeur de tension définie lorsque l'interrupteur d'entrée (50,50a) est ouvert et plus petite lorsque l'interrupteur d'entrée (50,50a) est fermé, dans lequel, à partir des interrogations qui consistent à savoir si la tension appliquée à l'entrée (2) est plus grande ou plus petite que la valeur de tension définie, le programme de traitement de données forme une information numérique qui peut être sortie, ou avec laquelle l'appareil électronique (10) peut être commandé, de sorte que, de par l'actionnement de l'interrupteur d'entrée (50, 50a), une entrée de données peut se produire dans le dispositif de traitement de données électronique (1),
**caractérisé en ce que**
- la sortie numérique (3) est connectée à l'entrée de commande (42) d'un interrupteur électronique (40) dont l'entrée de signal (41) est reliée à l'entrée (2) et dont la sortie de signal (43) est reliée à la masse (32) via l'interrupteur d'entrée (50, 50a),
- et que l'entrée de données et la sortie de données se produisent, l'une par rapport à l'autre, décalées dans le temps, via une ligne de sortie commune (35).

2. Procédé selon la revendication 1, **caractérisé en ce que**
le dispositif de traitement de données électronique (1) présente un dispositif d'interruption et que l'entrée (2) est une entrée d'interruption, la valeur de tension définie étant choisie de sorte que le dispositif d'interruption se trouve, dans une position de l'interrupteur d'entrée (50, 50a), dans un état actif, et dans l'autre position de l'interrupteur d'entrée (50, 50a), dans un état non actif.

3. Procédé selon la revendication 1, **caractérisé en ce que**
l'appareil électronique (10) est un capteur.

4. Procédé selon la revendication 1 ou 2, **caractérisé en ce que**
le dispositif de traitement de données électronique (1) est un microcontrôleur ou une logique programmable.

5. Procédé selon la revendication 1, **caractérisé en ce que**
le dispositif de traitement de données électronique (1) présente une sortie numérique (3) et ou bien un transistor bipolaire (40) dont la base (42) est reliée à la sortie numérique (3) du dispositif de traitement de données électronique (1), dont le collecteur (41) est relié à l'entrée (2) et dont l'émetteur (43) est relié à la masse (32) via l'interrupteur d'entrée (50, 50a), ou bien présente un transistor à effet de champ (40) dont la connexion de la grille est reliée à la sortie numérique (3) du dispositif de traitement de données électronique (1), dont la connexion de drain (41) est reliée à l'entrée (2) et dont la connexion à la source (43) est reliée à la masse (32) via l'interrupteur d'entrée (50, 50 a).

6. Procédé selon la revendication 1 ou 5, **caractérisé en ce que**
la sortie numérique (3) émet un signal High pour une durée définie directement ou après chaque procédé de mise en circuit du dispositif de traitement de données électronique (1).

7. Procédé selon la revendication 1 ou 5, **caractérisé en ce que**
la sortie numérique (3) émet à intervalles réguliers dans le temps un signal High d'une durée définie.

8. Procédé selon la revendication 1, **caractérisé en ce que**
l'appareil électronique (10) est mis en mode de communication avec le dispositif de traitement de données électronique (1) par un code défini au préalable de façon univoque.

9. Procédé selon la revendication 1, **caractérisé en ce que**
le dispositif de traitement de données électronique (1) peut être amené, par l'entrée de données correspondantes, à sortir des données via la sortie numérique (3).

10. Procédé selon la revendication 1, **caractérisé en ce que**
le dispositif de traitement de données électronique (1) est doté d'une pluralité d'entrées (2), de résistances (20), de lignes d'entrée (25) et d'interrupteurs d'entrée (50) à l'aide desquels une entrée de données parallèle peut se produire.

11. Procédé selon la revendication 1, **caractérisé en ce que**
le dispositif de traitement de données électronique (1) est doté d'une pluralité de sorties numériques (3), à l'aide desquelles une sortie de données parallèle peut se produire.

12. Procédé selon les revendications 10 et 11, **caractérisé en ce que**
le dispositif de traitement de données électronique (1) présente une pluralité d'interrupteurs électroniques dont les entrées de commande sont respectivement reliées à l'une des sorties numériques (3) du dispositif de traitement de données électronique (1) dont les entrées de signal sont respectivement reliées à une entrée (2) et dont les sorties de signal sont respectivement reliées à la masse (32) via un interrupteur d'entrée (50, 50a).

13. Procédé selon la revendication 1, **caractérisé en ce que**
le dispositif de traitement de données électronique (1) présente une pluralité de transistors bipolaires dont la base (42) est reliée à respectivement une sortie numérique (3) du dispositif de traitement de données électroniques (1), dont les collecteurs (41) sont respectivement reliés à une entrée (2) et dont les émetteurs (43) sont reliés à la masse (32) via respectivement un interrupteur d'entrée (50, 50a), ou présente une pluralité de transistors à effet de champ (40), dont les connexions des grilles sont respectivement reliées à une sortie numérique (3) du dispositif de traitement de données électronique (1), les connexions de drain (41) respectivement à une entrée (2) et les connexions à la source (43) à la masse (32), via respectivement un interrupteur d'entrée (50,50a).

14. Procédé selon la revendication 1, **caractérisé en ce que**
le dispositif de traitement de données électronique (1) présente une paire de sorties antivalentes, de sorte que l'une de ces sorties émet toujours un signal High lorsque l'autre sortie émet un signal Low et vice-versa, chacune de ces sorties étant connectée à l'entrée de commande d'un propre interrupteur électrique ou électronique et étant reliées à l'entrée (2) du dispositif de traitement de données électronique (1), les entrées de signal des deux interrupteurs électriques ou électroniques étant reliées entre elles et avec l'entrée (2) du dispositif de traitement de données électronique (1), et les sorties de signal des deux interrupteurs électriques ou électroniques étant reliées entre elles et avec l'entrée de signal de l'interrupteur d'entrée (50, 50a), de sorte qu'un signal High est toujours appliqué à l'entrée de commande de l'un des deux interrupteurs électriques ou électroniques, et par l'actionnement de l'interrupteur d'entrée (50, 50a), des données peuvent toujours être envoyées à l'entrée (2) du dispositif de traitement des données électronique (1).

15. Procédé selon la revendication 1, **caractérisé en ce que**
le microcontrôleur (1) présente deux entrées (2, 2a) et deux sorties numériques (3, 3a) dont la première sortie numérique (3) émet toujours un signal High lorsque l'autre sortie numérique (3a) émet un signal Low, et vice versa, chacune des sorties numériques (3, 3a) étant connectée selon le principe symétrique à l'entrée de commande (82, 82a) d'un propre interrupteur électrique ou électronique (80, 80a), l'entrée de signal (81) du premier interrupteur électronique (80) étant reliée à la première entrée (2) et, via une première résistance (20) à la tension d'alimentation (30), et l'entrée de signal (81a) du deuxième interrupteur électronique (80a) étant reliée à l'entrée de signal (2a) et, via une deuxième résistance (20a), à la masse (32), la sortie de signal (83) du premier interrupteur électronique (80) étant reliée à la sortie de signal (83a) du deuxième interrupteur électronique (80a), ainsi que, via la ligne de sortie (35), aux sorties de signal (91, 91 a) d'un premier et d'un deuxième interrupteur d'entrée (90, 90a), la sortie de signal du premier interrupteur d'entrée (90) étant reliée à la masse (32) et la sortie de signal du deuxième interrupteur d'entrée (90a) à la tension d'alimentation (30), et les entrées de commande (91, 91 a) des interrupteurs d'entrée (90, 90a) étant commandées par respectivement l'une des propres sorties (61, 61a) de la logique de commande (60), de sorte que, une entrée de données est possible à tout moment, ou bien via la première entrée (2), le premier interrupteur électronique (80) et le premier interrupteur d'entrée (90), ou via la deuxième entrée (2a), le deuxième interrupteur électronique (80a) et le deuxième interrupteur d'entrée (90a).

16. Procédé selon la revendication 15, **caractérisé en ce que**
la logique de commande (60) constate automatiquement par une mesure respective du flux de courant à ses sorties (61, 61a), lequel des deux interrupteurs électroniques (80, 80a) est précisément ouvert, et fait en sorte que lors de l'entrée des données, uniquement l'interrupteur d'entrée correspondant (90, 90a) est actionné.

17. Dispositif pour la communication de données en série avec un dispositif de traitement de données électronique (1) commandant au moins un appareil électronique (10), lequel dispositif de traitement de données présente une entrée (2) et une sortie numérique (3), via laquelle une sortie de données peut se produire et dans lequel un programme de traitement de données se déroule dans une boucle constante, lequel demande de façon cyclique si, à l'entrée (2), une tension est appliquée qui est plus grande ou plus petite qu'une valeur de tension définie,
dans lequel une tension qui est supérieure à la valeur de tension définie, est appliquée via une résistance (20) à l'entrée (2) qui est mise à la masse (32) via un interrupteur d'entrée (50, 50a), de sorte que la chute de tension à la résistance (20) est influencée par l'état de commutation de l'interrupteur d'entrée (50, 50a), de sorte que la tension appliquée à l'entrée (2) est plus grande que la valeur de tension définie lorsque l'interrupteur d'entrée (50, 50a) est ouvert et plus petite lorsque l'interrupteur d'entrée (50, 50a) est fermé,
dans lequel, à partir des interrogations qui consistent à savoir si la tension appliquée à l'entrée (2) est plus grande ou plus petite que la valeur de tension définie, le programme de traitement de données forme une information numérique qui peut être sortie ou avec laquelle l'appareil électronique (10) peut être commandé, de sorte que, de par l'actionnement de l'interrupteur d'entrée (50, 50a), une entrée de données peut se produire dans le dispositif de traitement de données électronique (1),
**caractérisé en ce que**
- la sortie numérique (3) est connectée à l'entrée de commande (42) d'un interrupteur électronique (40), dont l'entrée de signal (41) est reliée à l'entrée (2) et dont la sortie de signal (43) est reliée à la masse (32) via l'interrupteur d'entrée (50, 50a),
- et que l'entrée de données et la sortie de données se produisent l'une par rapport à l'autre décalées dans le temps, via une ligne de sortie commune (35).

18. Dispositif selon la revendication 17, **caractérisé en ce que**
le dispositif de traitement de données électronique (1) présente un dispositif d'interruption et que l'entrée (2) est une entrée d'interruption, la valeur de tension définie étant choisie de sorte que le dispositif d'interruption se trouve, dans une position de l'interrupteur d'entrée (50, 50a), dans un état actif, et dans l'autre position de l'interrupteur d'entrée (50, 50a), dans un état non actif.

19. Dispositif selon la revendication 17, **caractérisé en ce que**
le dispositif de traitement de données électronique (1) présente une sortie numérique (3) et, ou bien un transistor bipolaire (40) dont la base (42) est reliée à la sortie numérique (3) du dispositif de traitement de données électronique (1), dont le collecteur (41) est relié à l'entrée (2) et dont l'émetteur (43) est relié à la masse (32) via l'interrupteur d'entrée (50, 50a), ou bien présente un interrupteur électrique ou électronique, tel que par exemple un transistor à effet de champ (40) dont la connexion de la grille est reliée à la sortie numérique (3) du dispositif de traitement de données électronique (1), dont la connexion de drain (41) est reliée à l'entrée (2) et dont la connexion à la source (43) est reliée à la masse (32) via l'interrupteur d'entrée (50, 50 a).

20. Dispositif selon la revendication 17, **caractérisé en ce que**
le dispositif de traitement de données électronique (1) comprend un microcontrôleur ou un microprocesseur ou une logique programmable.

21. Dispositif selon la revendication 17, **caractérisé en ce que**
l'interrupteur d'entrée (50, 50a) est un interrupteur d'entrée électronique (50a) qui est actionné par une logique de commande (60).

22. Dispositif selon la revendication 17, **caractérisé en ce que**
l'appareil électronique (10) est un capteur.

23. Dispositif selon la revendication 17 ou 18, **caractérisé en ce que**
le dispositif de traitement de données électronique (1) est un microcontrôleur ou une logique programmable.
